# EUROPEAN PATENT SPECIFICATION

(11) **EP 3 692 946 B1**
(45) Date of publication and mention of the grant of the patent: **27.09.2023**
(21) Application number: 20154114.1
(22) Date of filing: 28.01.2020
(51) Int. Cl.: A61C 13/00, B26D 5/00, H04N 5/76

(54) **CUTTING SYSTEM AND CUTTING METHOD**
SCHNEIDSYSTEM UND SCHNEIDVERFAHREN
SYSTÈME ET PROCÉDÉ DE DÉCOUPE

(30) Priority: 30.01.2019 JP 2019014513
(43) Date of publication of application: 12.08.2020
(73) Proprietor: DGSHAPE Corporation, Hamamatsu-shi, Shizuoka 431-2103 (JP)
(72) Inventor: HANAJIMA, Masaki, Hamamatsu-shi, Shizuoka 431-2103 (JP); OTAKA, Akira, Hamamatsu-shi, Shizuoka 431-2103 (JP); MINENO, Yosuke, Hamamatsu-shi, Shizuoka 431-2103 (JP)
(74) Representative: Grünecker Patent- und Rechtsanwälte PartG mbB

(56) References cited:
- EP-A1- 3 372 338
- WO-A1-2019/008855
- DE-A1- 19 942 980
- JP-A- 2016 039 473
- US-A1- 2005 222 705
- US-A1- 2006 035 776

## Description

### BACKGROUND OF THE INVENTION

### 1. Field

The present invention relates to a cutting system and a cutting method for a cutting system, and more specifically, to a cutting system including a cutting device, an image capturing device and an error notification device.

### Description of the Related Art

For example, Japanese Laid-Open Patent Publication No. 2015-120222 discloses a cutting device that cuts a processing target molded by use of a predetermined material such as a ceramic material, a resin material or the like into a desired shape to produce a target product. The cutting device disclosed in Japanese Laid-Open Patent Publication No. 2015-120222 rotates a rod-like processing tool in an axial direction while changing relative positions of the processing tool and the processing target to cut the processing target. As a result, a desired target product is produced.

Further, US 2006/035776 A1 (DUNCAN ROD [US] ET AL) discloses a milling machine that is used to mill a crown or dental implant from a blank. A camera can be used to inspect the condition (wear) of the tip of tool. If an error is detected, the cover of the machine is illuminated in red, to inform its user.

Last, WO 2019/008855 A1 (KOMATSU IND CORP [JP]) discloses a machine system including a machine main body configured to process a workpiece, a camera configured to take a video of a processing process in which the workpiece is processed by the machine main body; and an information processing device that includes a memory and is configured to store, in the memory, video data acquired from the video taken by the camera. The information processing device is configured to protect, upon occurrence of abnormality in the processing process, the video data spanning a predetermined set period including a time of occurrence of the abnormality.

### SUMMARY OF THE INVENTION

In the above-described cutting device, an error may occur during cutting. A user does not necessarily keep on visually checking the cutting during the cutting. Therefore, the user may learn later that an error occurred. In such a case, the user may not know in what situation the error occurred.

The present invention provides a cutting system including a cutting device that in the case where an error occurred to the cutting device, allows a user to check how error occurred.

This is achieved by the features of the independent claims.

The present invention provides a cutting system that in the case where an error occurred to the cutting device, allows a user to check how error occurred.

The above and other elements, features, steps, characteristics and advantages of the present invention will become more apparent from the following detailed description of the preferred embodiments with reference to the attached drawings.

### BRIEF DESCRIPTION OF THE DRAWINGS

FIG. 1 is a conceptual view of a cutting system according to an embodiment of the present invention.
FIG. 2 is a perspective view of a cutting device.
FIG. 3 is a front view of the cutting device showing a state in which a cover is opened.
FIG. 4 is a perspective view of a tool magazine, a rotatable support member and a clamp.
FIG. 5 is a block diagram of the cutting system.
FIG. 6 shows a display screen.
FIG. 7 is a timing diagram showing the relationship between the timing at which the error occurs and the timing at which the error is detected regarding a concurrence error and a subsequence error.
FIG. 8 is a timing diagram showing a time period of an error moving image regarding each of the concurrence error and the subsequence error.
FIG. 9 is a flowchart showing a procedure of displaying the error moving image on the display screen when the error occurs.

### DETAILED DESCRIPTION OF THE PREFERRED EMBODIMENTS

Hereinafter, a cutting system according to an embodiment of the present invention will be described with reference to the attached drawings. The embodiment described herein is not provided with an intension to specifically limit the present invention, needless to say.

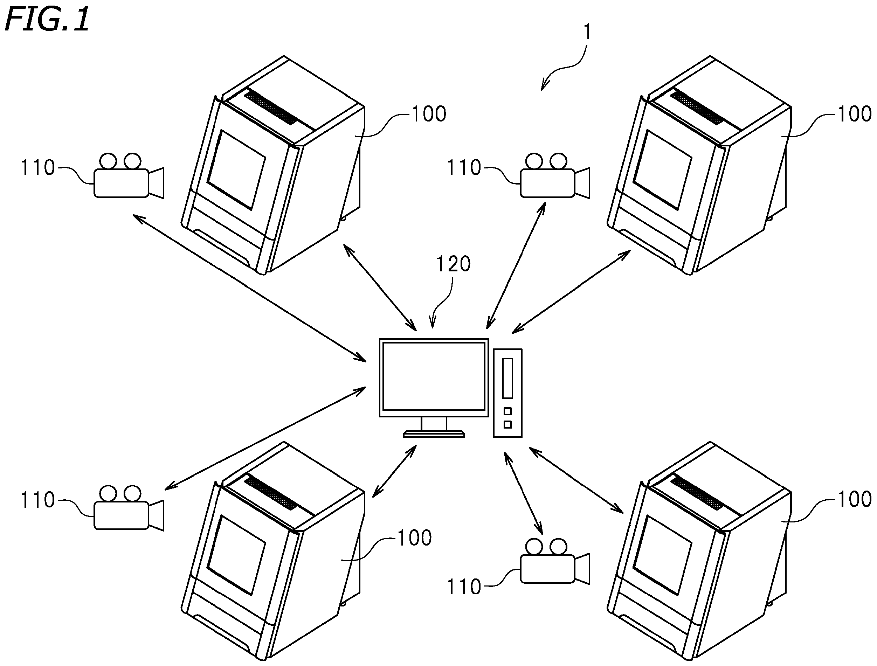

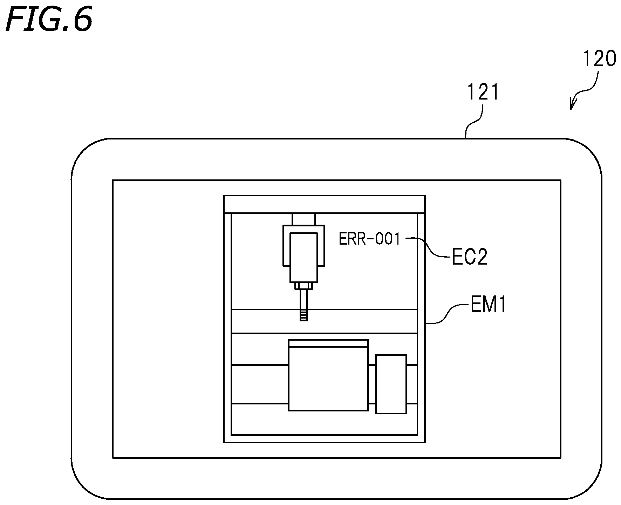

FIG. 1 is a conceptual view of a cutting system 1 according to an embodiment of the present invention. As shown in FIG. 1, the cutting system 1 includes cutting devices 100, image capturing devices 110, and an error notification device 120. The cutting system 1 is a system that in the case where an error occurs to one of the cutting devices 100, provides an error moving image EMI (see FIG. 6) captured by the corresponding image capturing device 110 to a user via the error notification device 120.

There is no specific limitation on the number of the cutting devices 100 or the number of the image capturing devices 110 according to this embodiment. One cutting device 100 and one image capturing device 110 may be provided, or a plurality of cutting devices 100 and a plurality of image capturing devices 110 may be provided. In the cutting system 1 according to this embodiment, the number of the cutting devices 100 is four and the number of the image capturing devices 110 is also four. In this example, one image capturing device 100 is provided for one cutting device 100. Alternatively, a plurality of image capturing devices 110 may be provided for one cutting device 100. Hereinafter, each of the devices will be described.

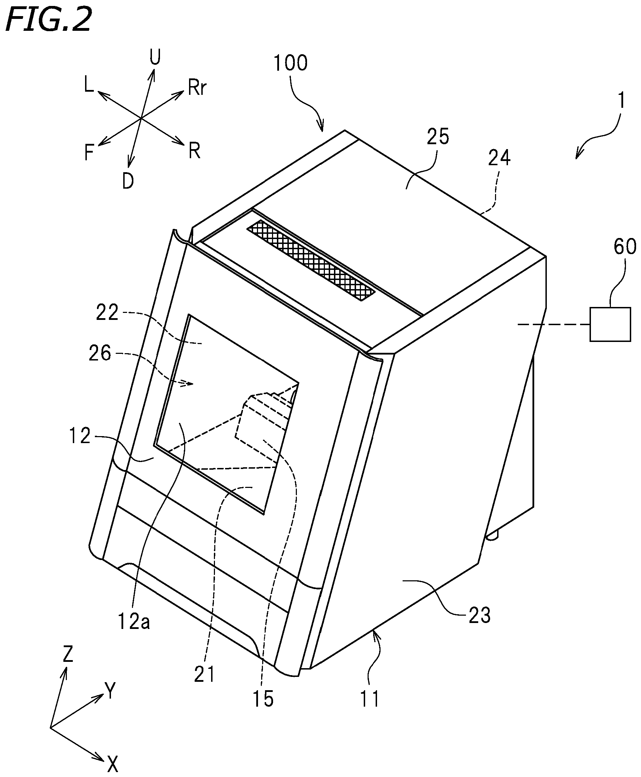

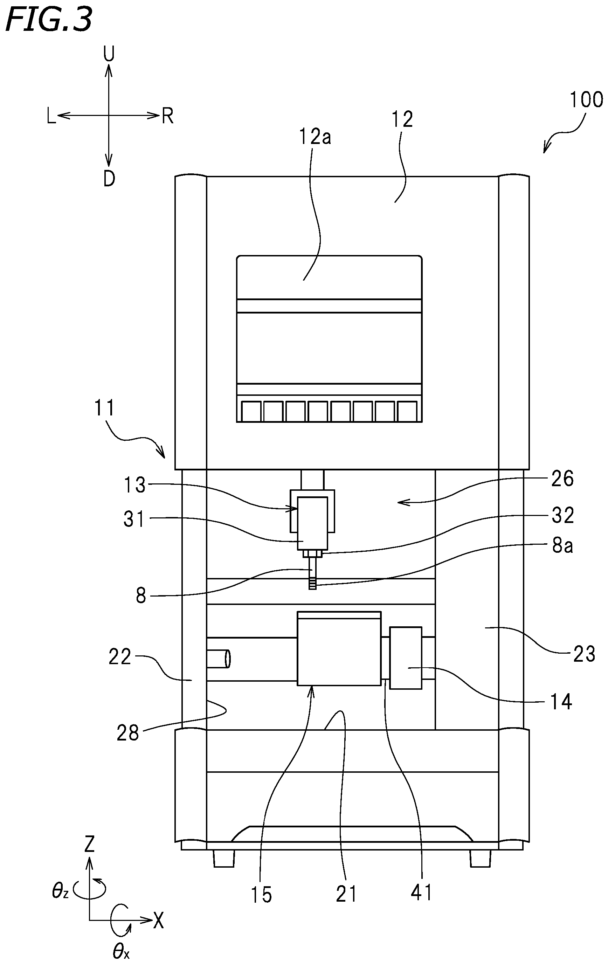

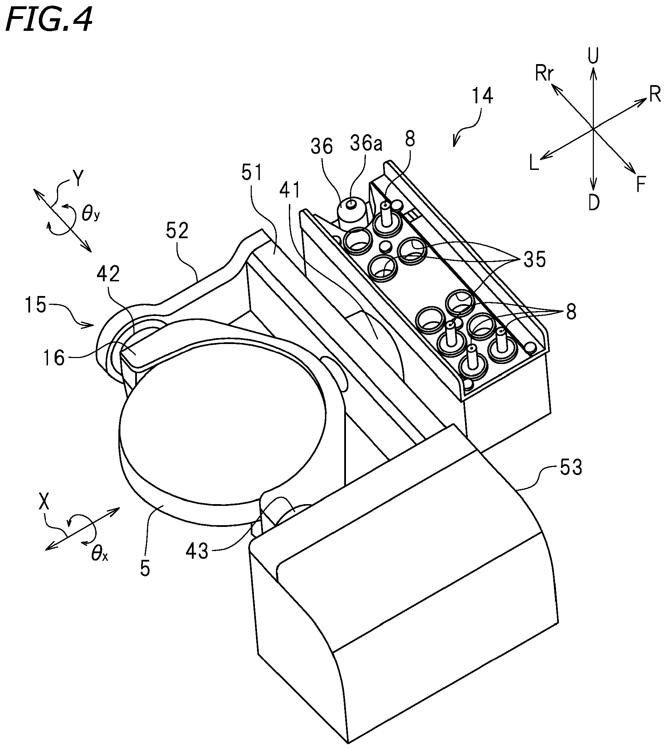

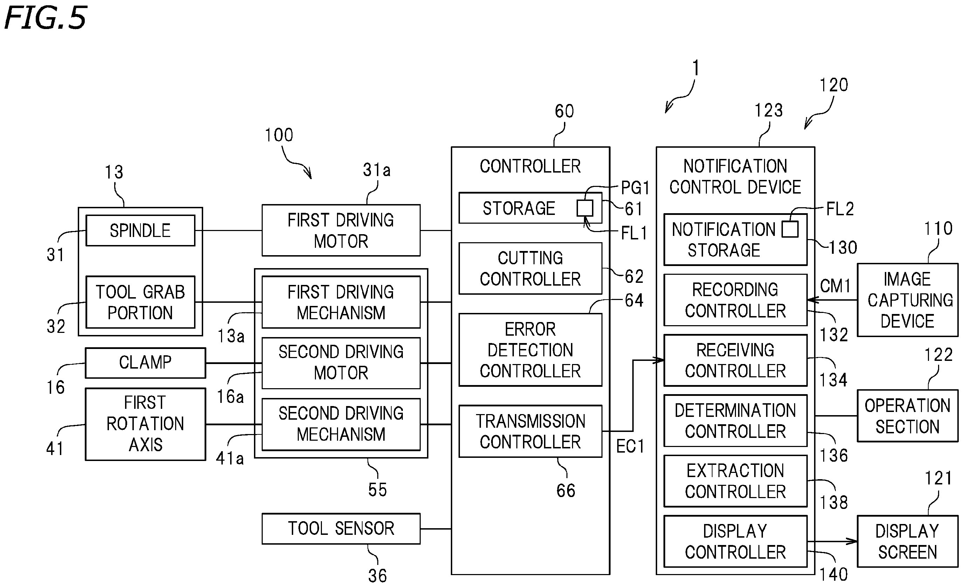

First, the cutting device 100 will be described. FIG. 2 is a perspective view of the cutting device 100. FIG. 3 is a front view of the cutting device 100, and shows a state in which a cover 12 is opened. FIG. 4 is a perspective view of a tool magazine 14, a rotatable support member 15 and a clamp 16 described below. FIG. 5 is a block diagram of the cutting system 1. In the following description, the terms "leftward" and "rightward" respectively refer to leftward and rightward as seen from a user who faces a front surface of the cutting device 100. As described below, a bottom wall 21 (see FIG. 2) of the cutting device 100 is inclined downward in a direction from a position closer to the user toward a position farther from the user. Thus, in this embodiment, a direction in which the cutting device 100 approaches the user along the bottom wall 21 will be referred to as a "forward direction", whereas a direction in which the cutting device 100 is distanced away from the user along the bottom wall 21 will be referred to as a "rearward direction". An upward direction perpendicular to the bottom wall 21 will be referred to as an "upward direction", whereas a downward direction perpendicular to the bottom wall 21 will be referred to as a "downward direction". In the drawings, letters F, Rr, L, R, U and D respectively indicate front, rear, left, right, up and down.

In this embodiment, where three axes perpendicular to each other are an X axis, a Y axis and a Z axis, the cutting device 100 is located on a flat plane defined by the X axis and the Y axis. The X axis extends in a left-right direction, the Y axis extends in a front-rear direction, and the Z axis extends in an up-down direction. In the drawings, θx, θy and θz respectively indicate rotation directions around the X axis, the Y axis and the Z axis. The above-described directions are merely provided for the convenience of description, and do not limit the manner in which the cutting device 100 is installed in any way, or do not limit the present invention in any way.

The four cutting devices 100 according to this embodiment have the same structure as each other. Therefore, hereinafter, a structure of one cutting device 100 will be described, and the description on the structure of the other cutting devices 100 will be omitted. It should be noted that a part of, or all of, the cutting devices 100 may have different structures. The cutting device 100 may include a so-called disc changer. The disc changer may be a conventionally known disc changer. The disc changer may be, for example, a processing target transportation device described in Japanese Laid-Open Patent Publication No. 2018-89763.

The cutting device 100 produces a target product by cutting a processing target 5 (see FIG. 4). There is no specific limitation on the structure of the cutting device 100. In this example, as shown in FIG. 2, the cutting device 100 includes a main body 11, the cover 12, a cutting mechanism 13 (see FIG. 3), the tool magazine 14 (see FIG. 4), the rotatable support member 15, and the clamp 16 (see FIG. 4).

The main body 11 is box-like, and includes an inner space. The inner space is a cutting space 26. The cutting space 26 is a space in which the processing target 5 is cut. As shown in FIG. 3, the main body 11 is open at the front. As shown in FIG. 2, the main body 11 includes the bottom wall 21, a left wall 22, a right wall 23, a rear wall 24, and a top wall 25. Although not shown, the bottom wall 21 is inclined downward in a direction from a front position toward a rear position. The left wall 22, the right wall 23 and the rear wall 24 respectively extend upward from a left end, a right end and a rear end of the bottom wall 21. The top wall 25 is connected with top ends of the left wall 22, the right wall 23 and the rear wall 24, and is located above the bottom wall 21. In this example, there is an opening 28 (see FIG. 3) enclosed by the bottom wall 21, the left wall 22, the right wall 23 and the top wall 25.

As shown in FIG. 3, the cover 12 is movable in the up-down direction along a front end of the left wall 22 and a front end of the right wall 23, and thus is openable and closable. The cover 12 moves upward, so that the inside and the outside of the main body 11 are communicated with each other. The cover 12 includes a window 12a. The user may visually recognize the cutting space 26 via the window 12a. In this embodiment, the cutting space 26 is enclosed by the bottom wall 21, the left wall 22, the right wall 23, the rear wall 24, the top wall 25, and the cover 12.

The cutting mechanism 13 uses a processing tool 8 to cut the processing target 5. The cutting mechanism 13 puts the processing tool 8 into contact with the processing target 5 while rotating the processing tool 8, and thus cuts the processing target 5. In this example, the cutting mechanism 13 includes a spindle 31 and a tool grab portion 32. The spindle 31 rotates the processing tool 8 together with the tool grab portion 32. The spindle 31 extends in the up-down direction and is rotatable in the direction θz around the Z axis. The tool grab portion 32 grabs the processing tool 8 and is provided on the spindle 31. More specifically, the tool grab portion 32 is provided on a bottom surface of the spindle 31.

In this embodiment, as shown in FIG. 5, the spindle 31 is connected with a first driving motor 31a. The first driving motor 31a is driven to rotate the spindle 31 in the direction θz around the Z axis. Along with the rotation of the spindle 31, the tool grab portion 32 and the processing tool 8 grabbed by the tool grab portion 32 are rotated in the direction θz around the Z axis. The cutting mechanism 13 is movable in the left-right direction and in the up-down direction by a first driving mechanism 13a (see FIG. 5).

As shown in FIG. 4, the tool magazine 14 is capable of accommodating a plurality of the processing tools 8. In this embodiment, the tool magazine 14 is box-like. A plurality of accommodation holes 35 accommodating the processing tools 8 is formed in a top surface of the tool magazine 14. The processing tools 8 are inserted into the accommodation holes 35 in a state in which top portions thereof are exposed. There is no specific limitation on the number of the accommodation holes 35. In this example, the number of the accommodation holes 35 is 10. Therefore, in this embodiment, the tool magazine 14 is capable of accommodating 10 processing tools 8. The processing tool 8 grabbed by the tool grab portion 32 is replaced with a different one as follows. The processing tool 8 grabbed by the tool grab portion 32 is returned to the corresponding accommodation hole 35. Then, the cutting mechanism 13 is moved to a position above the processing tool 8 to be used next. Next, a top end of the processing tool 8 located below the tool grab portion 32 is grabbed by the tool grab portion 32.

In this embodiment, the cutting device 100 includes a tool sensor 36. The tool sensor 36 is provided in the tool magazine 14. The tool sensor 36 senses that the tool processing tool 8, which is rod-like, grabbed by the tool grab portion 32 has contacted the tool sensor 36. There is no specific limitation on the structure of the tool sensor 36. In this embodiment, the tool sensor 36 includes a switch 36a. The switch 36a is displaced by being supplied with a microscopic load from above. The tool sensor 36 senses that the processing tool 8 has contacted the tool sensor 36 by the displacement of the switch 36a.

In this embodiment, the tool magazine 14 is provided with a first rotation shaft 41 supporting the rotatable support member 15 such that the rotatable support member 15 is rotatable. The first rotation shaft 41 extends in the left-right direction, and is coupled with the rotatable support member 15. The tool magazine 14 is provided with a second driving mechanism 41a (see FIG. 5) rotating the first rotation shaft 41. The first rotation shaft 41 is rotatable in the direction θx around the X axis by the second driving mechanism 41a. The rotation of the first rotation shaft 41 in the direction θx around the X axis rotates the rotatable support member 15 in the direction θx around the X axis.

The rotatable support member 15 supports the clamp 16 such that the clamp 16 is rotatable. The rotatable support member 15 is generally C-shaped as seen in a plan view. The rotatable support member 15 is coupled with the tool magazine 14 via the first rotation shaft 41. The rotatable support member 15 includes a first portion 51, a second portion 52 and a third portion 53. The first portion 51 is located to the left of the tool magazine 14, and extends in the front-rear direction. The second portion 52 extends leftward from a rear end of the first portion 51. The third portion 53 extends leftward from a front end of the first portion 51. The third portion 53 faces the second portion 52. In this embodiment, the clamp 16 is located between the second portion 52 and the third portion 53.

The clamp 16 supports the processing target 5 while the processing target 5 is being cut. The processing target 5 is cut by the processing tool 8. The processing target 5 is cut, and thus a desired target product is produced. In this embodiment, the processing target 5 is formed of a target material, which is a material of the target product. There is no specific limitation on the shape of the processing target 5 or the type of the target material. In this embodiment, the processing target 5 is disc-shaped. The target material forming the processing target 5 is, for example, a ceramic material, a resin material of the like. In this embodiment, the processing target 5 has an adaptor (not shown) attached thereto.

The clamp 16 supports the adaptor, and supports the processing target 5 via the adaptor. The clamp 16 has a shape that, for example, corresponds to the shape of a part of the processing target 5. In this example, the clamp 16 is generally C-shaped as seen in a plan view. In this embodiment, the processing target 5 supported by the clamp 16 is cut. The clamp 16 is rotatably supported by the second portion 52 and the third portion 53 of the rotatable support member 15. In this embodiment, a rear portion of the clamp 16 is connected with one end of a second rotation shaft 42, and the other end of the second rotation shaft 42 is connected with the second portion 52. A front portion of the clamp 16 is connected with one end of a third rotation shaft 43, and the other end of the third rotation shaft 43 is connected with the third portion 53. In this embodiment, the third portion 53 is provided with a second driving motor 16a (see FIG. 5) rotating the clamp 16 in the direction θy around the Y axis. In this embodiment, the clamp 16 corresponds to a "support mechanism" of the present invention.

In this embodiment, as shown in FIG. 5, a movement mechanism 55 includes the first driving mechanism 13a moving the cutting mechanism 13 in the left-right direction and in the up-down direction, the second driving mechanism 41a rotating the first rotation shaft 41 to rotate the rotatable support member 15 and the clamp 16 in the direction θx around the X axis, and the second driving motor 16a rotating the clamp 16 in the direction θy around the Y axis. The movement mechanism 55 moves the processing target 5 supported by the clamp 16 and the cutting mechanism 13 (more specifically, the spindle 31, the tool grab portion 32, and the processing tool 8 grabbed by the tool grab portion 32) with respect to each other.

As shown in FIG. 2, the cutting device 100 includes a controller 60. The controller 60 controls the cutting performed on the processing target 5 and also controls detection of an error occurring to the cutting device 100 during the cutting. The controller 60 includes a microcomputer, and is provided inside the main body 11. The controller 60 includes, for example, a central processing unit (CPU), a ROM having, stored thereon, a program or the like to be executed by the CPU, a RAM and the like. In this example, the controller 60 uses the program stored on the microcomputer to control the cutting performed on the processing target 5 and to control the detection of an error occurring to the cutting device 100 during the cutting.

As shown in FIG. 5, the controller 60 is communicably connected with the movement mechanism 55 and the first driving motor 31a to control the movement mechanism 55 and the first driving motor 31a. In this example, the controller 60 is communicably connected with the first driving mechanism 13a moving the cutting mechanism 13, the second driving mechanism 41a rotating the first rotation shaft 41 and the second driving motor 16a to control the first driving mechanism 13a, the second driving mechanism 41a and the second driving motor 16a. The controller 60 is also communicably connected with the tool sensor 36 to control the tool sensor 36.

In this embodiment, the controller 60 includes a storage 61, a cutting controller 62, an error detection controller 64, and a transmission controller 66. These components of the controller 60 may be provided as software or hardware. These components of the controller 60 may each be realized by one or a plurality of processors or incorporated in the form of a circuit.

The storage 61 has a cutting program PG1 stored thereon. The cutting device 100 automatically cuts the processing target 5 by use of one or the plurality of processing tools 8 based on the cutting program PG1 to produce a desired target product. The cutting program PG1 is so-called NC data (NC program) or job data. The cutting program PG1 shows a procedure in which the cutting device 100 cuts the processing target 5. In the cutting program PG1, a plurality of processing steps is recorded that define, with coordinate values, an operation of the cutting mechanism 13 and an operation of the clamp 16 supporting the processing target 5. The cutting program PG1 is created by, for example, a computer aided manufacturing (hereinafter, may be referred to also as "CAM") device. In this embodiment, the CAM device creates the cutting program PG1 based on shape data on the target product (hereinafter, referred to as "target data") that is created by the cutting performed on the processing target 5. The target data is STL data, and is created by, for example, a computer aided design (CAD) device.

The cutting program PG1 is stored on a cutting file FL1 (see FIG. 5). In this embodiment, one or a plurality of target products is produced from one processing target 5 by execution of the cutting program PG1 stored on the cutting file FL1. It should be noted that the number of the processing targets 5 to be cut when the cutting program PG1 on one cutting file FL1 is executed is not limited to one, and may be two or more.

The cutting controller 62 controls the cutting mechanism 13, the clamp 16 and the movement mechanism 55 such that the processing target 5 is cut based on the cutting program PG1 stored on the cutting file FL1. In this embodiment, the cutting controller 62 controls the operation of the cutting mechanism 13 and the operation of the clamp 16 based on the coordinate values in the cutting program PG1. The cutting controller 62 comprehensively controls the entire operation of the clamp 16 as well as the operation of the cutting mechanism 13. This allows the positional relationship between the processing target 5 supported by the clamp 16 and the processing tool 8 to be changed three-dimensionally to realize highly precise cutting by five-axis control in the X-axis direction, the Y-axis direction, the Z-axis direction, the direction θx around the X axis and the direction θy around the Y axis. In this embodiment, a blade portion 8a (see FIG. 3) of the processing tool 8 rotated by the spindle 31 of the cutting mechanism 13 is put into contact with the processing target 5 supported by the clamp 16, and thus the processing target 5 is cut. In this example, the processing tool 8 is put into contact with an arbitrary position in the processing target 5 at an arbitrary angle to produce a target product.

The error detection controller 64 detects an error occurring to the cutting device 100 while the processing target 5 is being cut. There is no specific limitation on the type of the error. An error occurs when the processing target 5 is not properly cut. The error encompasses, for example, an error caused by the processing tool 8 being broken (hereinafter, referred to as a "tool breakage error"), an error caused by the tool grab portion 32 not being capable of grabbing the processing tool 8, an error caused by the spindle 31 not being rotated at an appropriate rotation rate, an error caused by the cutting mechanism 13 or the clamp 16 not being moved to an appropriate position by the movement mechanism 55, and the like. The error detection controller 64 detects such an error by performing image processing on a moving image captured by the image capturing device 110.

Hereinafter, control to detect the above-mentioned tool breakage error will be briefly described as an example of control on error detection executed by the error detection controller 64. In this embodiment, a "determination length", which is a length of each of the plurality of processing tools 8 (more specifically, a length of each processing tool 8 in an axial direction thereof), is stored on the storage 61. The error detection controller 64 detects whether a tool breakage error has occurred or not, both before and after the processing tool 8 is used for the cutting, namely, after the processing tool 8 is removed from the tool magazine 14 and also before the processing tool 8 is accommodated in the tool magazine 14. In this example, the error detection controller 64 controls the movement mechanism 55 such that a bottom end of the processing tool 8 contacts the switch 36a of the tool sensor 36 in a state in which the processing tool 8 is grabbed by the tool grab portion 32. Based on the position of the tool grab portion 32 or the spindle 31 in the up-down direction at the time when the processing tool 8 contacts the switch 36a, the error detection controller 64 calculates an "actual length", which is an actual length of the processing tool 8.

The error detection controller 64 compares the actual length of the processing tool 8 against the determination length of the processing tool 8 stored on the storage 61. In the case where the actual length of the processing tool 8 is shorter than the determination length of the processing tool 8, the error detection controller 64 determines that a tool breakage error has occurred and thus detects an error.

When an error occurs to the cutting device 100, the transmission controller 66 transmits error information EC1 on the error to the error notification device 120. In this example, when the error detection controller 64 detects an error, the transmission controller 66 transmits the error information EC1 on the detected error to the error notification device 120. There is no specific limitation on the content of the error information EC1. The error information EC1 may be, for example, an error code associated with each of errors. The error code is stored on the storage 61 in advance as being associated with an error. The error code includes a signal corresponding to the error code. The error code is uniquely set in accordance with the type of the error. The user may recognize what type of error has occurred by learning the error code.

An example of structure of the cutting device 100 according to this embodiment has been described. Now, the image capturing device 110 (see FIG. 1) will be described. The image capturing device 110 captures a moving image of the inside of the cutting space 26 (see FIG. 3) of the cutting device 100. In this example, the image capturing device 110 captures a moving image showing how the processing target 5 is being cut by the cutting mechanism 13 with the processing tool 8 in the cutting space 26. There is no specific limitation on the type of the image capturing device 110. The image capturing device 110 is, for example, a camera capable of capturing a moving image. In this embodiment, as shown in FIG. 1, one image capturing device 110 is provided for one cutting device 100. Since four cutting devices 100 are provided in the cutting system 1, four image capturing devices 110 are provided. The number of the image capturing devices 110 provided for one cutting device 100 is not limited to one, and may be two or more.

There is no specific limitation on the position of the image capturing device 110 with respect to the cutting device 100. The image capturing device 110 may be located at any position where the image capturing device 110 is capable of capturing an image showing how the processing target 5 is being cut in the cutting space 26 of the cutting device 100. The image capturing device 110 may be located in the main body 11 (more specifically, in the cutting space 26) or may be located at a position outside the main body 11 where an image of the inside of the cutting space 26 may be captured through the window 12a (see FIG. 2) of the cover 12. In the case where the image capturing device 110 is located inside the main body 11, it is preferred that the image capturing device 110 is located at a position where powdery material of the processing target 5 generated by the cutting is not easily attached to the image capturing device 110. In this case, the image capturing device 110 may be located, for example, in a top area of the cutting space 26. In the case where, for example, three image capturing devices 110 are provided for one cutting device 100, the image capturing devices 110 include a first image capturing device, a second image capturing device, and a third image capturing device. In this case, the first image capturing device is located, for example, to the front of the clamp 16. The second image capturing device is located, for example, above the tool magazine 14 and the clamp 16. The third image capturing device is located, for example, at a position where the third image capturing device is capable of capturing an image of a state of the disc changer (e.g., a position above the disc changer).

Now, the error notification device 120 will be described. When an error occurs to the cutting device 100, the error notification device 120 creates an error moving image EM1 (see FIG. 6) including a moving image showing how the error occurred, and displays the error moving image EM1. The error notification device 120 is realized by, for example, a personal computer. The personal computer may be a general-purpose computer or a specialized computer for creating and displaying the error moving image EM1. The error notification device 120 may be a so-called client-server type device. A part of the error notification device 120 may be a so-called cloud computer. A part of the error notification device 120 may be a mobile terminal. The "mobile terminal" encompasses a smartphone, a tablet terminal and the like.

In this embodiment, as shown in FIG. 1, the error notification device 120 is communicably connected with the plurality of cutting devices 100 and the plurality of image capturing devices 110. There is no specific limitation on the manner of connection, and the connection may be realized in a wired manner or in a wireless manner.

As shown in FIG. 5, the error notification device 120 includes a display screen 121, an operation section 122, and a notification control device 123. FIG. 6 shows an example of display screen 121. As shown in FIG. 6, the error moving image EM1 is displayed on the display screen 121. The display screen 121 may display an error message EC2 based on the error information EC1 (see FIG. 5) on the error that has occurred. The error message EC2 includes an error code or a document based on the error code. The error message EC2 may include, for example, the time when the error occurred, a parameter defined in advance to indicate the target of the error, the type of the cutting device 100 to which the error occurred (e.g., model name, serial number assigned to the cutting device 100, etc.) in addition to the error code. The display screen 121 may display information on the cutting device 100. The information on the cutting device 100 includes, for example, information on the cutting device 100 as the target of the error moving image EM1, a processing history on the processing target 5, an error history, information on the processing tool 8 used in the cutting device 100, information on the material, size or the like of the processing target 5, information on the cutting program PG1 used when the error occurred, and the like. There is no specific limitation on the type of the display screen 121. The display screen 121 is, for example, a display of a mobile terminal. The display screen 121 may be a display of a personal computer.

The operation section 122 shown in FIG. 5 is to be used by the user in order to make an operation on the data displayed on the display screen 121. There is no specific limitation on the type of the operation section 122. The operation section 122 may be, for example, a touch panel provided on the display screen 121. Alternatively, the operation section 122 may include a keyboard and a mouse of a personal computer. In this example, one display screen 121 and one operation section 122 are provided. Alternatively, a plurality of the display screens 121 and a plurality of the operation sections 122 may be provided. In this case, the error moving image EM1 may be displayed on the plurality of display screens 121.

The notification control device 123 shown in FIG. 5 performs control to capture a moving image of the cutting device 100 or control to extract the error moving image EM1 and display the error moving image EM1 on the display screen 121. There is no specific limitation on the structure of the notification control device 123. The notification control device 123 is, for example, a microcomputer. There is no specific limitation on the hardware configuration of the microcomputer. The microcomputer includes, for example, a CPU, a ROM, a RAM, a storage device and the like. In the case where the error notification device 120 is a client-server type device, the notification control device 123 is realized by, for example, the server. In the case where the error notification device 120 is a cloud computer, the notification control device 123 is realized on, for example, the cloud.

The notification control device 123 is communicably connected with the controller 60 of the cutting device 100 in a wired or wireless manner. The notification control device 123 is communicably connected with the image capturing device 110. The notification control device 123 is communicably connected with the display screen 121 and the operation section 122.

In this embodiment, the notification control device 123 includes a notification storage 130, a recording controller 132, a receiving controller 134, a determination controller 136, an extraction controller 138, and a display controller 140. The components of the notification control device 123 may be provided as software or hardware. The components of the notification control device 123 may each be realized by one or a plurality of processors or incorporated in the form of a circuit.

The recording controller 132 controls the image capturing device 110 such that a moving image of the inside of the cutting space 26 (see FIG. 3) (hereinafter, this moving image will be referred to as a "cutting moving image CM1") of the cutting device 100 is captured. The recording controller 132 starts capturing the cutting moving image CM1 at the timing at which the cutting device 100 starts executing the cutting program PG1 stored on the cutting file FL1. The recording controller 132 finishes capturing the cutting moving image CM1 at the timing at which the cutting device 100 finishes executing the cutting program PG1. As described above, the recording controller 132 captures the cutting moving image CM1 showing how the processing target 5 is being cut in the cutting space 26. The cutting moving image CM1 is kept captured while the cutting program PG1 is being executed. In this embodiment, one cutting moving image CM1 is created for one cutting file FL1. The notification storage 130 stores a moving image file FL2 having, stored thereon, the cutting moving image CM1 captured by the recording controller 132. One cutting moving image CM1 is stored on one moving image file FL2.

The receiving controller 134 receives information such as, for example, a signal transmitted from the controller 60 of the cutting device 100. In this embodiment, the receiving controller 134 receives the error information EC1 transmitted from the transmission controller 66 of the controller 60. As a result, the error notification device 120 recognizes that an error has occurred to the corresponding cutting device 100.

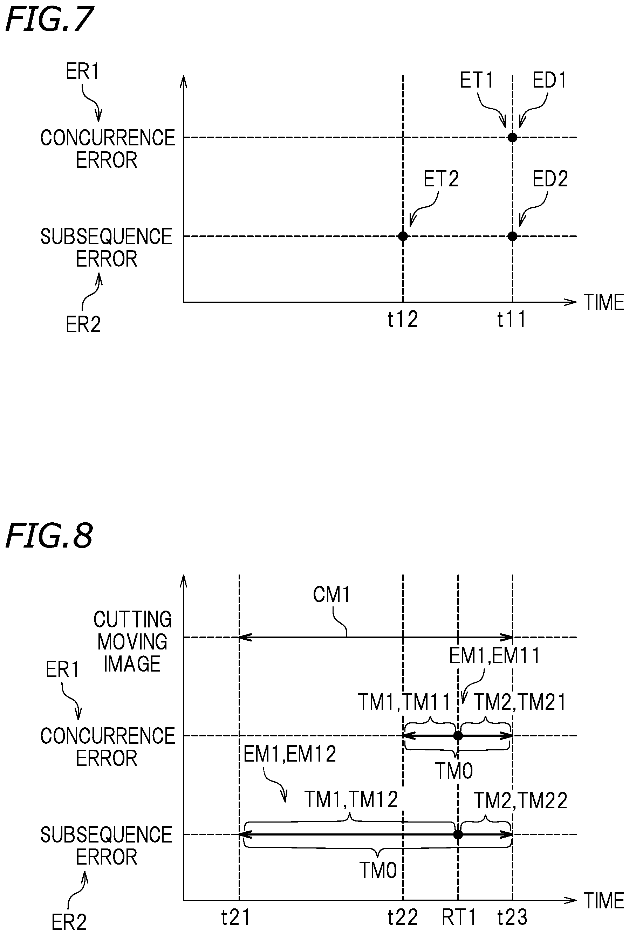

FIG. 7 is a timing diagram showing the relationship between the timing at which the error occurs and the timing at which the error is detected regarding a concurrence error ER1 and a subsequence error ER2. The determination controller 136 determines whether the error that has occurred to the cutting device 100 is a concurrence error ER1 or a subsequence error ER2 based on the error information EC1 received by the receiving controller 134. In this embodiment, an error occurring to the cutting device 100 during the cutting is either a concurrence error ER1 or a subsequence error ER2. For example, referring to FIG. 7, at time t11, an error ET1 occurs to the cutting device 100 and an error detection ED1 is executed by the error detection controller 64. The error ET1, which occurs to the cutting device 100 and is subjected to the error detection ED1 by the error detection controller 64 at the same timing, is referred to a "concurrence error ER1". The expression that "the timings are the same" encompasses a case where a slight time lag occurs. One example of the concurrence error ER1 is an error that the rotation of the spindle 31 is insufficient.

For example, referring to FIG. 7, at time t11, an error detection ED2 is executed by the error detection controller 64. At time t12, which is before time t11, an error ET2 occurs to the cutting device 100. The error ET2, which occurs to the cutting device 100 before being subjected to the error detection ED2 by the error detection controller 64, is referred to a "subsequence error ER2". In the case of the subsequence error ER2, when the error detection controller 64 of the cutting device 100 detects the error, the cutting device 100 is already in a state after the error occurs. A timing at which the subsequence error ER2 occurs is before the timing at which the error ER2 is detected. One example of the subsequence error ER2 is the tool breakage error mentioned above. The tool breakage error is not detected when the processing tool 8 is broken, but is detected after the processing tool 8 is broken, more specifically, when the processing tool 8 is put into contact with the tool sensor 36 (see FIG. 4). Therefore, there is a lag between the time when the error actually occurs and the time when the error is detected. An error that occurs and is detected at different timings is referred to as a "subsequence error ER2".

The extraction controller 138 extracts the error moving image EM1 (see FIG. 6) from the cutting moving image CM1 captured by the image capturing device 110. FIG. 8 is a timing diagram showing a time period of the error moving image EM1 regarding each of the concurrence error ER1 and the subsequence error ER2. In FIG. 8, the arrows each represent a time period of the moving image. As shown in FIG. 8, the error moving image EM1 lasts for a predetermined error recording time period TM0 on the basis of the time when the receiving controller 134 receives the error information EC1 (hereinafter, the time will be referred to as a "receiving time RT1"). In other words, the error recording time period TM0 of the error moving image EM1 includes at least the receiving time RT1. There is no specific limitation on the length of the error recording time period TM0. The length of the error recording time period TM0 is set in accordance with the content of the error information EC1. In the following description, the error moving image EM1 of the concurrence error ER1 will be labeled with EM11 when necessary, and the error moving image EM1 of the subsequence error ER2 will be labeled with EM12, when necessary.

The error recording time period TM0 includes a before-the-receiving time period TM1 and an after-the-receiving time period TM2. The before-the-receiving time period TM1 is an error recording time period before the receiving time RT1. The after-the-receiving time period TM2 is an error recording time period after the receiving time RT1. In this embodiment, the error moving image EM1 is the cutting moving image CM1 extending for a predetermined time period before the error detection by the error detection controller 64 and for a predetermined time period after the error detection by the error detection controller 64.

As shown in FIG. 8, in the case where the concurrence error ER1 occurs, the error moving image EM11, in which the before-the-receiving time period TM1 is a first before-the-receiving time period TM11 and the after-the-receiving time period TM2 is a first after-the-receiving time period TM21, is extracted. Namely, the total time period of the first before-the-receiving time period TM11 and the first after-the-receiving time period TM21 is the recording time period of the error moving image EM11 of the concurrence error ER1. There is no specific limitation on the specific numerical value of the first before-the-receiving time period TM11 or the first after-the-receiving time period TM21. For example, the first before-the-receiving time period TM11 is a time period from time t22 to the receiving time RT1. The first after-the-receiving time period TM21 is a time period from the receiving time RT1 to time t23. The first before-the-receiving time period TM11 and the first after-the-receiving time period TM21 are each, for example, 3 seconds to 10 seconds. The first before-the-receiving time period TM11 and the first after-the-receiving time period TM21 may be the same as, or different from, each other.

In the case where the subsequence error ER2 occurs, the error moving image EM12, in which the before-the-receiving time period TM1 is a second before-the-receiving time period TM12 and the after-the-receiving time period TM2 is a second after-the-receiving time period TM22, is extracted. Namely, the total time period of the second before-the-receiving time period TM12 and the second after-the-receiving time period TM22 is the recording time period of the error moving image EM12 of the subsequence error ER2. The second before-the-receiving time period TM12 is a time period from time t21, before time t22, to the receiving time RT1. The second before-the-receiving time period TM12 is longer than the first before-the-receiving time period TM11. The second before-the-receiving time period TM12 is, for example, a time period from the start of the cutting moving image CM1. In this embodiment, the second after-the-receiving time period TM22 is a time period from the receiving time RT1 to time t23. The second after-the-receiving time period TM22 is as long as the first after-the-receiving time period TM21. Alternatively, the second after-the-receiving time period TM22 may be longer or shorter than the first after-the-receiving time period TM21. In this embodiment, the second after-the-receiving time period TM22 is shorter than the second before-the-receiving time period TM12.

There is no specific limitation on the manner of the control by which the extraction controller 138 extracts the error moving image EM1. For example, an error moving image, of the error moving image EM1, that corresponds to the before-the-receiving time period TM1 may be extracted from the cutting moving image CM1 already recorded. In this case, the extraction controller 138 extracts a moving image of the before-the-receiving time period TM1 from the cutting moving image CM1 recorded by the recording controller 132. By contrast, an error moving image, of the error moving image EM1, that corresponds to the after-the-receiving time period TM2 may be extracted from a cutting moving image CM1 that is to be recorded now, instead of from the cutting moving image CM1 already recorded. In this case, the extraction controller 138 extracts the cutting moving image CM1 of the after-the-receiving time period TM2, which is to start at the receiving time RT1, at the same time as when this part of the cutting moving image CM1 is recorded by the recording controller 132.

As shown in FIG. 6, the display controller 140 displays, on the display screen 121, the error moving image EM1 extracted by the extraction controller 138. The display controller 140 may display, on the display screen 121, the error information EC1 received by the receiving controller 134 or the error message EC2 based on the error information EC1, together with the error moving image EM1.

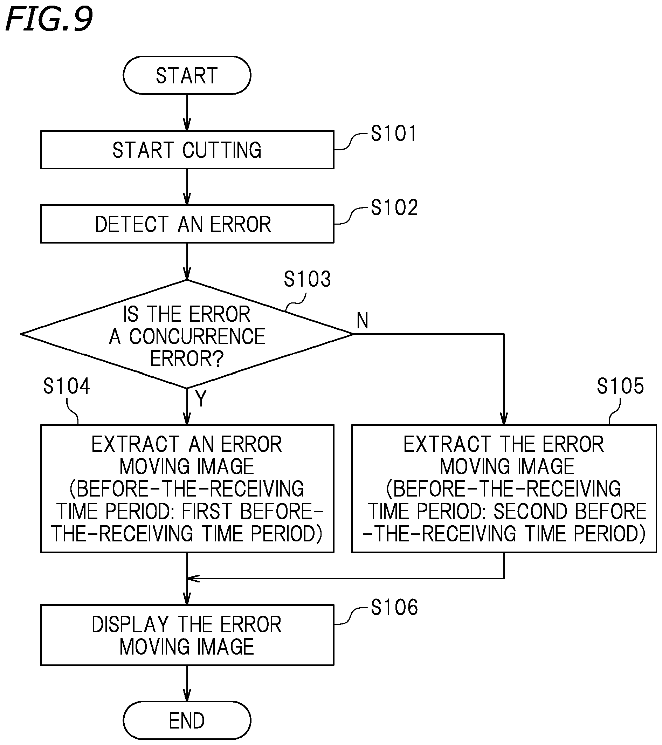

The structure of the cutting system 1 according to this embodiment has been described. Now, a procedure of displaying the error moving image EM1 when an error occurs to one of the plurality of cutting devices 100 will be described with reference to FIG. 9, which is a flowchart. The flowchart in FIG. 9 shows a flow until the error moving image EM1 is displayed on the display screen 121 in the case where an error occurs during the cutting.

First, in step S101, the cutting device 100 starts cutting. In this example, the cutting controller 62 of the cutting device 100 executes the cutting program PG1 stored on the cutting file FL1 stored on the storage 61. At the same time as the start of the execution of the cutting program PG1, or before the start of the execution of the cutting program PG1 (e.g., at the timing at which the user presses a cutting start button (not shown)), a cutting start signal is transmitted from the transmission controller 66 to the receiving controller 134 of the error notification device 120. When the receiving controller 134 receives the cutting start signal, the recording controller 132 controls the image capturing device 110 provided in the cutting device 100 that transmitted the cutting start signal such that a moving image of the inside of the cutting space 26, in which the cutting is being performed, starts being captured. The cutting moving image CM1 that is being captured is stored on the notification storage 130 sequentially even while being captured.

It is now assumed that after the cutting and the image capturing of the cutting moving image CM1 start in step S101, an error occurs to the cutting device 100 that is performing the cutting in step S102. For example, it is assumed that a "tool breakage error" that the processing tool 8 grabbed by the tool grab portion 32 of the processing device 100 is broken during the cutting occurs. At this point, the transmission controller 66 of the cutting device 100 transmits an error code, which is an example of the error information EC1 corresponding to the tool breakage error, to the error notification device 120. The receiving controller 134 of the error notification device 120 receives the transmitted error code.

Next, in step S103, the determination controller 136 determines whether the error that has occurred is a concurrence error ER1 or a subsequence error ER2 based on the error code received by the receiving controller 134. In the case where, for example, the received error code corresponds to the concurrence error ER1, the determination controller 136 determines that the error that has occurred to the cutting device 100 is a concurrence error ER1 (YES in step S103). Then, the procedure advances to step S104. In step S104, as shown in FIG. 8, the extraction controller 138 extracts, from the cutting moving image CM1, the error moving image EM11, in which the before-the-receiving time period TM1 is the first before-the-receiving time period TM11 and the after-the-receiving time period TM2 is the first after-the-receiving time period TM21. The cutting moving image CM1 to be extracted is the cutting moving image, the capturing of which is started in step S101.

In the case where in step S103, the received error code corresponds to the subsequence error ER2 (e.g., took breakage error), the determination controller 136 determines that the error that has occurred to the cutting device 100 is a subsequence error ER2 (NO in step S103). Then, the procedure advances to step S105. In step S105, as shown in FIG. 8, the extraction controller 138 extracts, from the cutting moving image CM1, the error moving image EM12, in which the before-the-receiving time period TM1 is the second before-the-receiving time period TM12 and the after-the-receiving time period TM2 is the second after-the-receiving time period TM22. The error moving images EM11 and EM12 extracted in steps S104 and S105 are stored on the notification storage 130.

After the error moving image EM1 (more specifically, either error moving image EM11 or EM12) is extracted as described above, in step S106, the display controller 140 displays, on the display screen 121 (see FIG. 6), the error moving image EM1 extracted by the extraction controller 138. The display controller 140 may display, on the display screen 121, the error message EC2 (see FIG. 6) including the error code. The error message EC2 may be displayed as overlapping the error moving image EM1 or may be displayed in an area different from that of the error moving image EM1. In this manner, the error moving image EM1 is displayed on the display screen 121 when an error occurs to the cutting device 100.

As described above, in this embodiment, while the cutting device 100 is performing the cutting, the cutting moving image CM1 of the inside of the cutting space 26 (see FIG. 3), in which the cutting is performed, is captured. In the case where an error occurs to the cutting device 100 in this state, the error moving image EM1 (see FIG. 8) of a predetermined error recording time period TM0 on the basis of the receiving time RT1, at which the receiving controller 134 of the error notification device 120 receives the error information EC1, is extracted from the cutting moving image CM1. The error moving image EM1 of this time period includes a moving image showing how the error occurred. Therefore, the user may check how the error occurred by viewing the error moving image EM1 displayed on the display screen 121. In this manner, it may be checked how the error occurred, and thus an appropriate measure against the error that has occurred may be taken.

In this embodiment, as shown in FIG. 6, the display controller 140 displays, on the display screen 121 together with the error moving image EM1, the error message EC2 such as the error code or the like based on the error information EC1 received by the receiving controller 134. Therefore, the user, when checking the display screen 121, may easily learn what type of error is shown by the error moving image EM1.

In this embodiment, as shown in FIG. 8, the error recording time period TM0 of the error moving image EM1 includes the before-the-receiving time period TM1 before the receiving time RT1 and the after-the-receiving time period TM2 after the receiving time RT1. With such an arrangement, the error moving image EM1 includes a moving image after the error is detected, in addition to a moving image before the error is detected. Therefore, the user may check how the cutting device 100 operated after the error was detected, in addition to how the cutting device 100 operated before the error was detected. Thus, an appropriate measure in accordance with the state of the cutting device 100 before and after the error was detected may be taken.

In this embodiment, as shown in FIG. 7, the error occurring to the cutting device 100 is one of a concurrence error ER1 and a subsequence error ER2. In the case of the concurrence error ER1, the timing at which the error detection controller 64 detects the error (in FIG. 7, ED1) and the timing at which the error actually occurs to the cutting device 100 (in FIG. 7, ET1) are the same as each other. In the case of the subsequence error ER2, the timing at which the error occurs (in FIG. 7, ET2) is before the timing at which the error detection controller 64 detects the error (in FIG. 7, ED2). In the case where the error occurring to the cutting device 100 is determined by the determination controller 136 to be the concurrence error ER1, the extraction controller 138 extracts the error moving image EM11, for which the before-the-receiving time period TM1 is set to the predetermined first before-the-receiving time period TM11 as shown in FIG. 8. In the case where the error occurring to the cutting device 100 is determined by the determination controller 136 to be the subsequence error ER2, the extraction controller 138 extracts the error moving image EM12, for which the before-the-receiving time period TM1 is set to the predetermined second before-the-receiving time period TM12 longer than the first before-the-receiving time period TM11. In the case of the subsequence error ER2, the error occurs before being detected. Therefore, if the before-the-receiving time period TM1 is set to be shorter, the error moving image EM1 may not include a moving image that shows how the error actually occurred. Therefore, in this embodiment, the before-the-receiving time period TM1 of the subsequence error ER2 is set to be relatively long. More specifically, the before-the-receiving time period TM1 of the subsequence error ER2 is set to start at the time when the cutting moving image CM1 starts (in FIG. 8, time t21). With such an arrangement, a moving image that shows how the error actually occurred is easily included even in the error moving image EM12 of the subsequence error ER2.

In this embodiment, the tool breakage error is a subsequence error ER2. The storage 61 has, stored thereon, the determination length, which is the length of the processing tool 8 in the axial direction thereof in a state in which the processing tool 8 is grabbed by the tool grab portion 32. The error detection controller 64 calculates the actual length, which is the actual length of the processing tool 8 in the axial direction, based on the position of the cutting mechanism 13 when the processing tool 8 grabbed by the tool grab portion 32 is put into contact with the tool sensor 36 (see FIG. 4). In the case where the actual length is shorter than the determination length, the error detection controller 64 detects that the tool breakage error that the processing tool 8 is broken has occurred. As can be seen, in the case of the tool breakage error, the time when the processing tool 8 grabbed by the tool grab portion 32 is detected to be broken is after the time when the error actually occurs. The tool breakage error is set as a subsequence error ER2. Therefore, even when the tool breakage error occurs, it is easy to cause the error moving image EM1 to include a moving image that shows how the error actually occurred.

In this embodiment, as shown in FIG. 5, the storage 61 of the controller 60 has, stored thereon, the cutting file FL1 having the cutting program PG1 stored thereon. The cutting controller 62 controls the cutting mechanism 13, the clamp 16 and the movement mechanism 55 such that the processing target 5 is cut based on the cutting program PG1. The recording controller 132 records the cutting moving image CM1 for each cutting program PG1 stored on the cutting file FL1. In this example, one cutting moving image CM1 is created for one cutting file FL1. Therefore, even if the error moving image EM1 extracted by the extraction controller 138 does not include a moving image that shows how the error actually occurred, the user may check the cutting moving image CM1 corresponding to the cutting program PG1 that was executed when the error actually occurred. Thus, it is easy to find a moving image that shows how the error actually occurred.

In this embodiment, as shown in FIG. 1, the error notification device 120 is connected with the plurality of cutting devices 100, an additional cutting device 100, the plurality of image capturing devices 110 and an additional image capturing devices 110. Therefore, one error notification device 120 may check errors occurring to the plurality of cutting devices 100 with the error moving images EM1. Thus, even when the plurality of cutting devices 100 is used, it is easy to grasp the state of errors occurring to the cutting devices 100.

In this embodiment, the display screen 121 of the error notification device 120 is a display of a mobile terminal. Therefore, when an error occurs to the cutting device 100, the user may check the state of the error with the error moving image EM1 wherever the user may be.

## Claims

1. A cutting system (1), comprising:
a cutting device (100) that includes a main body (11) including a cutting space (26) in which a processing target (5) is cut and also includes a controller (60);
an image capturing device (110) that captures a cutting moving image (CM1) of the inside of the cutting space (26); and
an error notification device (120) that includes a display screen (121) and a notification control device (123) that is communicably connected with the controller (60) and the image capturing device (110),
wherein:
the controller (60) includes:
an error detection controller (64) that detects an error occurring while the processing target (5) is being cut, and
the notification control device (123) includes:
a recording controller (132) that records the cutting moving image (CM1) captured by the image capturing device (110) while the cutting device (100) is performing cutting,
**characterized in that**
the controller (60) further includes
a transmission controller (66) that transmits error information (EC1) to the notification control device (123) when the error is detected by the error detection controller (64), and
the notification control device (123) further includes:
a receiving controller (134) that receives the error information (EC1) transmitted by the transmission controller (66),
an extraction controller (138) that extracts an error moving image (EM1) from the cutting moving image (CM1) captured by the image capturing device (110), the error moving image (EM1) being a moving image of a predetermined error recording time period (TM0) on the basis of receiving time (RT1) at which the receiving controller (134) receives the error information (EC1), and
a display controller (140) that displays, on the display screen (121), the error moving image (EM1) extracted by the extraction controller (138), and
the error detection controller (64) detects the error by performing image processing on the cutting moving image (CM1) captured by the image capturing device (110).

2. The cutting system (1) according to claim 1, wherein the display controller (140) displays, on the display screen (121) together with the error moving image (EM1), an error message (EC2) based on the error information (EC1) received by the receiving controller (134).

3. The cutting system (1) according to claim 1 or 2, wherein the error recording time period (TM0) includes:
a before-the-receiving time period (TM1) before the receiving time (RT1), and
an after-the-receiving time period (TM2) after the receiving time (RT1).

4. The cutting system (1) according to claim 3, wherein:
the error occurring to the cutting device (100) is one of:
a concurrence error (ER1) that is detected by the error detection controller (64) and occurs to the processing device (100) at the same timing, and
a subsequence error (ER2) that occurs to the processing device (100) at a timing before being detected by the error detection controller (64),
the notification control device (123) includes a determination controller (136) that determines whether the error occurring to the cutting device (100) is the concurrence error (ER1) or the subsequence error (ER2) based on the error information (EC1) received by the receiving controller (134),
in the case where the error occurring to the cutting device (100) is determined by the determination controller (136) to be the concurrence error (ER1), the extraction controller (138) extracts the error moving image (EM1) for which the before-the-receiving time period (TM1) is set to a predetermined first before-the-receiving time period (TM11), and
in the case where the error occurring to the cutting device (100) is determined by the determination controller (136) to be the subsequence error (ER2), the extraction controller (138) extracts the error moving image (EM1) for which the before-the-receiving time period (TM1) is set to a predetermined second before-the-receiving time period (TM12) longer than the first before-the-receiving time period (TM11).

5. The cutting system (1) according to claim 4, wherein:
the cutting device (100) includes:
a cutting mechanism (13) that includes a tool grab portion (32) grabbing a rod-like processing tool (8) and a spindle (31) rotating the tool grab portion (32), and is located in the cutting space (26), and
a tool sensor (36) that is located in the cutting space (26) and is contactable with the processing tool (8) grabbed by the tool grab portion (32),
the controller (60) includes a storage (61) that has, stored thereon, a determination length, which is a length of the processing tool (8) in an axial direction thereof in a state in which the processing tool (8) is grabbed by the tool grab portion (32),
the error detection controller (64) calculates an actual length, which is an actual length of the processing tool (8) in the axial direction, based on the position of the cutting mechanism (13) when the processing tool (8) grabbed by the tool grab portion (32) is put into contact with the tool sensor (36), and in the case where the actual length is shorter than the determination length, the error detection controller (64) detects that a tool breakage error that the processing tool (8) is broken has occurred, and
the tool breakage error is the subsequence error (ER2).

6. The cutting system (1) according to any one of claims 1 through 4, wherein:
the cutting device (100) includes:
a cutting mechanism (13) that is located in the cutting space (26) and cuts the processing target (5),
a support mechanism (16) that is located in the cutting space (26) and supports the processing target (5), and
a movement mechanism (55) that moves the cutting mechanism (13) and the processing target (5) supported by the support mechanism (16) with respect to each other,
the controller (60) includes:
a storage (61) that has, stored thereon, a cutting file (FL1) that has a cutting program (PG1) stored thereon, and
a cutting controller (62) that controls the cutting mechanism (13), the support mechanism (16) and the movement mechanism (55) such that the processing target (5) is cut based on the cutting program (PG1), and
the recording controller (132) records the cutting moving image (CM1) for one cutting program (PG1) stored on the cutting film (FL1).

7. The cutting system (1) according to any one of claims 1 through 6, further comprising:
an additional cutting device (100) that includes an additional main body (11) including an additional cutting space (26) in which an additional processing target (5) is cut and also includes an additional controller (60); and
an additional image capturing device (110) that captures an additional cutting moving image (CM1) of the inside of the additional cutting space (26);
wherein:
the notification control device (123) is communicably connected with the additional cutting device (100) and the additional image capturing device (110),
the additional controller (60) includes:
an additional error detection controller (64) that detects an error occurring while the additional processing target (5) is being cut, and
an additional transmission controller (66) that transmits additional error information (EC1) to the notification control device (123) when the error is detected by the additional error detection controller (64),
the recording controller (132) records the additional cutting moving image (CM1) captured by the additional image capturing device (110),
the receiving controller (134) receives the additional error information (EC1) transmitted by the additional transmission controller (66),
the extraction controller (138) extracts an additional error moving image (EM1) from the additional cutting moving image (CM1) captured by the additional image capturing device (110), the additional error moving image (EM1) being a moving image of an additional predetermined error recording time period (TM0) on the basis of additional receiving time (RT1) at which the receiving controller (134) receives the additional error information (EC1), and
the display controller (140) displays, on the display screen (121), the additional error moving image (EM1) extracted by the extraction controller (138).

8. The cutting system (1) according to any one of claims 1 through 7, wherein the display screen (121) is a display of a mobile terminal.

9. A cutting method for a cutting system (1) comprising a cutting device (100) that includes a cutting space (26) in which a processing target (5) is cut, an image capturing device (110) that captures a cutting moving image (CM1) of the inside of the cutting space (26), and an error notification device (120) that includes a display screen (121) and a notification control device (123), the method comprising the steps of:
detecting an error occurring while the processing target (5) is being cut, and
transmitting error information (EC1) to the notification control device (123) when the error is detected,
wherein the notification control device (123) is executing the steps of:
recording the cutting moving image (CM1) captured by the image capturing device (110) while the cutting device (100) is performing cutting,
receiving the transmitted error information (EC1),
extracting an error moving image (EM1) from the cutting moving image (CM1) captured by the image capturing device (110), the error moving image (EM1) being a moving image of a predetermined error recording time period (TM0) on the basis of receiving time (RT1) at which the receiving controller (134) receives the error information (EC1), and
displaying, on the display screen (121), the extracted error moving image (EM1), and
wherein the error is detected by performing image processing on the cutting moving image (CM1) captured by the image capturing device (110).

## Patentansprüche

1. Schneidesystem (1), umfassend:
eine Schneidevorrichtung (100), die einen Hauptkörper (11) mit einem Schneideraum (26) umfasst, in dem ein Bearbeitungsziel (5) geschnitten wird, und die zudem eine Steuereinheit (60) umfasst;
eine Bilderfassungsvorrichtung (110), die ein Schneidebewegungsbild (CM1) des Inneren des Schneideraums (26) erfasst; und
eine Fehlerbenachrichtigungsvorrichtung (120), die einen Anzeigebildschirm (121) und eine Benachrichtigungs-Steuervorrichtung (123) umfasst, die mit der Steuereinheit (60) und der Bilderfassungsvorrichtung (110) kommunizierend verbunden ist,
wobei:
die Steuereinheit (60) umfasst:
eine Fehlererkennungssteuereinheit (64), die einen Fehler erkennt, der auftritt, während das Verarbeitungsziel (5) geschnitten wird, und
die Benachrichtigungs-Steuervorrichtung (123) umfasst:
eine Aufzeichnungssteuereinheit (132), die das Schneidebewegungsbild (CM1) aufzeichnet, das von der Bilderfassungsvorrichtung (110) erfasst wird, während die Schneidevorrichtung (100) einen Schnitt ausführt,
**dadurch gekennzeichnet, dass**
die Steuereinheit (60) weiterhin umfasst:
eine Sendesteuereinheit (66), die Fehlerinformationen (EC1) an die Benachrichtigungs-Steuervorrichtung (123) sendet, wenn der Fehler von der Fehlererkennungssteuereinheit (64) erkannt wird, und
die Benachrichtigungs-Steuervorrichtung (123) weiterhin umfasst:
eine Empfangssteuereinheit (134), die die von der Sendesteuereinheit (66) gesendeten Fehlerinformationen (EC1) empfängt,
eine Extraktionssteuereinheit (138), die ein Fehlerbewegungsbild (EM1) aus dem von der Bilderfassungsvorrichtung (110) erfassten Schneidebewegungsbild (CM1) extrahiert, wobei das Fehlerbewegungsbild (EM1) ein Bewegungsbild einer vorbestimmten Fehleraufzeichnungszeitspanne (TM0) auf der Basis der Empfangszeit (RT1) ist, zu der die Empfangssteuereinheit (134) die Fehlerinformationen (EC 1 ) empfängt, und
eine Anzeigesteuereinheit (140), die auf dem Anzeigebildschirm (121) das von der Extraktionssteuereinheit (138) extrahierte Fehlerbewegungsbild (EM1) anzeigt, und
die Fehlererkennungssteuereinheit (64) den Fehler erkennt, indem sie eine Bildverarbeitung an dem Schneidebewegungsbild (CM1) ausführt, das von der Bilderfassungsvorrichtung (110) erfasst wurde.

2. Schneidesystem (1) nach Anspruch 1, bei dem die Anzeigesteuereinheit (140) auf dem Anzeigebildschirm (121) zusammen mit dem Fehlerbewegungsbild (EM1) eine Fehlermeldung (EC2) anzeigt, die auf den von der Empfangssteuereinheit (134) empfangenen Fehlerinformationen (EC1) basiert.

3. Schneidesystem (1) nach Anspruch 1 oder 2, bei dem die Fehleraufzeichnungszeitspanne (TM0) umfasst:
eine Vor-dem-Empfang-Zeitspanne (TM1) vor dem Empfangszeitpunkt (RT1) und eine Nach-dem-Empfang-Zeitspane (TM2) nach dem Empfangszeitpunkt (RT1).

4. Schneidesystem (1) nach Anspruch 3, bei dem:
der an der Schneidevorrichtung (100) auftretende Fehler einer der folgenden ist:
ein Gleichzeitigkeitsfehler (ER1), der von der Fehlererkennungssteuereinheit (64) erkannt wird und in der Verarbeitungsvorrichtung (100) zum gleichen Zeitpunkt auftritt, und
ein Folgefehler (ER2), der in der Verarbeitungsvorrichtung (100) zu einem Zeitpunkt auftritt, bevor er von der Fehlererkennungssteuereinheit (64) erkannt wird,
die Benachrichtigungs-Steuervorrichtung (123) eine Bestimmungs-Steuereinheit (136) umfasst, die auf der Grundlage der von der Empfangs-Steuereinheit (134) empfangenen Fehlerinformationen (EC1) bestimmt, ob es sich bei dem in der Schneidevorrichtung (100) auftretenden Fehler um den Gleichzeitigkeitsfehler (ER1) oder um den Folgefehler (ER2) handelt,
in dem Fall, in dem der Fehler, der bei der Schneidevorrichtung (100) auftritt, von der Bestimmungs-Steuereinheit (136) als Gleichzeitigkeitsfehler (ER1) bestimmt wird, die Extraktionssteuereinheit (138) das Fehlerbewegungsbild (EM1) extrahiert, für das die Vor-dem-Empfang-Zeitspanne (TM1) auf eine vorbestimmte erste Vor-dem-Empfang-Zeitspanne (TM11) gesetzt ist, und
in dem Fall, in dem der Fehler, der an der Schneidevorrichtung (100) auftritt, von der Bestimmungs-Steuereinheit (136) als der Folgefehler (ER2) bestimmt wird, die Extraktionssteuereinheit (138) das Fehlerbewegungsbild (EM1) extrahiert, für das die Vor-dem-Empfang-Zeitspanne (TM1) auf eine vorbestimmte zweite Vor-dem-Empfang-Zeitspanne (TM12) eingestellt ist, die länger als die erste Vor-dem-Empfang-Zeitspanne (TM11) ist.

5. Schneidesystem (1) nach Anspruch 4, bei dem:
die Schneidevorrichtung (100) umfasst:
einen Schneidemechanismus (13), der einen Werkzeuggreifabschnitt (32), der ein stabförmiges Bearbeitungswerkzeug (8) greift, und eine Spindel (31), die den Werkzeuggreifabschnitt (32) dreht, umfasst und in dem Schneideraum (26) angeordnet ist, und
einen Werkzeugsensor (36), der sich in dem Schneideraum (26) befindet und mit dem von dem Werkzeuggreifabschnitt (32) gegriffenen Bearbeitungswerkzeug (8) in Kontakt gebracht werden kann,
die Steuereinheit (60) einen Speicher (61) umfasst, in dem eine Bestimmungslänge gespeichert ist, die eine Länge des Bearbeitungswerkzeugs (8) in einer axialen Richtung desselben in einem Zustand ist, in dem das Bearbeitungswerkzeug (8) von dem Werkzeuggreifabschnitt (32) gegriffen wird,
die Fehlererkennungssteuereinheit (64) eine tatsächliche Länge berechnet, die eine tatsächliche Länge des Bearbeitungswerkzeugs (8) in der axialen Richtung ist, basierend auf der Position des Schneidemechanismus (13), wenn das Bearbeitungswerkzeug (8), das von dem Werkzeuggreifabschnitt (32) gegriffen ist, in Kontakt mit dem Werkzeugsensor (36) gebracht wird, und in dem Fall, in dem die tatsächliche Länge kürzer als die Bestimmungslänge ist, die Fehlererkennungssteuereinheit (64) erkennt, dass ein Werkzbeschädigungsfehler, dass das Bearbeitungswerkzeug (8) beschädigt ist, aufgetreten ist, und
der Werkzeugbeschädigungsfehler der Folgefehler (ER2) ist.

6. Schneidesystem (1) nach einem der Ansprüche 1 bis 4, bei dem:
die Schneidevorrichtung (100) umfasst:
einen Schneidemechanismus (13), der sich in dem Schneideraum (26) befindet und das Bearbeitungsziel (5) schneidet,
einen Haltemechanismus (16), der sich in dem Schneideraum (26) befindet und das Bearbeitungsziel (5) hält, und
einen Bewegungsmechanismus (55), der den Schneidemechanismus (13) und das von dem Trägermechanismus (16) getragene Bearbeitungsziel (5) in Bezug zueinander bewegt,
die Steuereinheit (60) umfasst:
einen Speicher (61), in dem eine Schneidedatei (FL1) gespeichert ist, in der ein Schneideprogramm (PG1) gespeichert ist, und
eine Schneidesteuereinheit (62), die den Schneidemechanismus (13), den Haltemechanismus (16) und den Bewegungsmechanismus (55) so steuert, dass das Bearbeitungsziel (5) auf der Grundlage des Schneideprogramms (PG1) geschnitten wird, und
die Aufzeichnungssteuereinheit (132) das Schneidebewegungsbild (CM1) für eine in der Schneidedatei (FL1) gespeichertes Schneideprogramm (PG1) aufzeichnet.

7. Schneidesystem (1) nach einem der Ansprüche 1 bis 6, weiterhin umfassend:
eine zusätzliche Schneidevorrichtung (100), die einen zusätzlichen Hauptkörper (11) mit einem zusätzlichen Schneideraum (26) aufweist, in dem ein zusätzliches Bearbeitungsziel (5) geschnitten wird, und die zudem eine zusätzliche Steuereinheit (60) umfasst; und
eine zusätzliche Bilderfassungsvorrichtung (110), die ein zusätzliches Schneidebewegungsbild (CM1) des Inneren des zusätzlichen Schneideraums (26) erfasst;
wobei:
die Benachrichtigungs-Steuervorrichtung (123) kommunikativ mit der zusätzlichen Schneidevorrichtung (100) und der zusätzlichen Bilderfassungsvorrichtung (110) verbunden ist,
die zusätzliche Steuereinheit (60) umfasst:
eine zusätzliche Fehlererkennungssteuereinheit (64), die einen Fehler erkennt, der auftritt, während das zusätzliche Verarbeitungsziel (5) geschnitten wird, und
eine zusätzliche Sendesteuereinheit (66), die zusätzliche Fehlerinformationen (EC1) an die Benachrichtigungs-Steuervorrichtung (123) sendet, wenn der Fehler von der zusätzlichen Fehlererkennungssteuereinheit (64) erkannt wird,
die Aufzeichnungssteuereinheit (132) das zusätzliche Schneidebewegungsbild (CM1) aufzeichnet, das von der zusätzlichen Bilderfassungsvorrichtung (110) erfasst wurde,
die Empfangssteuereinheit (134) die von der zusätzlichen Sendesteuereinheit (66) gesendeten zusätzlichen Fehlerinformationen (EC1) empfängt,
die Extraktionssteuereinheit (138) ein zusätzliches Fehlerbewegungsbild (EM1) aus dem zusätzlichen Schneidebewegungsbild (CM1) extrahiert, das von der zusätzlichen Bilderfassungsvorrichtung (110) erfasst wurde, wobei das zusätzliche Fehlerbewegungsbild (EM1) ein Bewegungsbild einer zusätzlichen vorbestimmten Fehleraufzeichnungszeitspanne (TM0) auf der Basis einer zusätzlichen Empfangszeit (RT1) ist, zu der die Empfangssteuereinheit (134) die zusätzliche Fehlerinformation (EC1) empfängt, und
die Anzeigesteuereinheit (140) auf dem Anzeigebildschirm (121) das zusätzliche Fehlerbewegungsbild (EM1) anzeigt, das von der Extraktionssteuereinheit (138) extrahiert wurde.

8. Schneidesystem (1) nach einem der Ansprüche 1 bis 7, bei dem der Anzeigebildschirm (121) ein Bildschirm eines mobilen Endgerätes ist.

9. Schneideverfahren für ein Schneidesystem (1), umfassend eine Schneidevorrichtung (100), die einen Schneideraum (26) umfasst, in dem ein Verarbeitungsziel (5) geschnitten wird, eine Bilderfassungsvorrichtung (110), die ein bewegliches Schneidebild (CM1) des Inneren des Schneideraums (26) erfasst, und eine Fehlerbenachrichtigungsvorrichtung (120), die einen Anzeigebildschirm (121) und eine Benachrichtigungs-Steuervorrichtung (123) umfasst, wobei das Verfahren die folgenden Schritte umfasst:
Erkennen eines Fehlers, der während des Schneidens des Verarbeitungsziels (5) auftritt, und
Senden von Fehlerinformationen (EC1) an die Benachrichtigungs-Steuervorrichtung (123), wenn der Fehler erkannt wird,
wobei die Benachrichtigungs-Steuervorrichtung (123) die folgenden Schritte ausführt:
Aufzeichnen des Schneidebewegungsbildes (CM1), das von der Bilderfassungsvorrichtung (110) erfasst wurde, während die Schneidevorrichtung (100) einen Schnitt ausführt,
Empfangen der gesendeten Fehlerinformationen (EC1),
Extrahieren eines Fehlerbewegungsbildes (EM1) aus dem von der Bilderfassungsvorrichtung (110) erfassten Schneidebewegungsbild (CM1), wobei das Fehlerbewegungsbild (EM1) ein Bewegungsbild einer vorbestimmten Fehleraufzeichnungszeitspanne (TM0) auf der Basis der Empfangszeit (RT1) ist, zu der die Empfangssteuereinheit (134) die Fehlerinformationen (EC1) empfängt, und
Anzeigen des extrahierten Fehlerbewegungsbildes (EM1) auf dem Anzeigebildschirm (121),
wobei der Fehler durch Ausführen einer Bildverarbeitung an dem von der Bilderfassungsvorrichtung (110) erfassten Schneidebewegungsbild (CM1) erfasst wird.

## Revendications

1. Système de découpe (1) comprenant
un dispositif de découpe (100) qui comprend un corps principal (11) comprenant un espace de découpe (26) dans lequel une cible de traitement (5) est découpée et qui comprend également un dispositif de commande (60) ;
un dispositif de capture d'images (110) qui capture une image mobile de découpe (CM1) de l'intérieur de l'espace de découpe (26) ; et
un dispositif de notification d'erreur (120) qui comprend un écran d'affichage (121) et un dispositif de commande de notification (123) qui est connecté de manière communicable avec le dispositif de commande (60) et le dispositif de capture d'images (110),
dans lequel :
le dispositif de commande (60) comprend :
un dispositif de commande de détection d'erreur (64) qui détecte une erreur survenant pendant que la cible de traitement (5) est découpée, et
le dispositif de commande de la notification (123) comprend
un dispositif de commande d'enregistrement (132) qui enregistre l'image mobile de découpe (CM1) capturée par le dispositif de capture d'images (110) pendant que le dispositif de découpe (100) effectue la découpe,
**caractérisé par le fait que**
le dispositif de commande (60) comprend en outre
un dispositif de commande de transmission (66) qui transmet l'information d'erreur (EC1) au dispositif de commande de notification (123) lorsque l'erreur est détectée par le dispositif de commande de détection d'erreur (64), et
le dispositif de commande de la notification (123) comprend en outre :
un dispositif de commande de réception (134) qui reçoit les informations d'erreur (EC1) transmises par le dispositif de commande de transmission (66),
un dispositif de commande d'extraction (138) qui extrait une image animée d'erreur (EM1) de l'image animée de découpe (CM1) capturée par le dispositif de capture d'images (110), l'image animée d'erreur (EM1) étant une image animée d'une période de temps d'enregistrement d'erreur prédéterminée (TMO) sur la base de l'heure de réception (RT1) à laquelle le dispositif de commande de réception (134) reçoit l'information d'erreur (EC1), et
un dispositif de commande d'affichage (140) qui affiche, sur l'écran d'affichage (121), l'image mobile d'erreur (EM1) extraite par le dispositif de commande d'extraction (138), et
le dispositif de commande de détection d'erreur (64) détecte l'erreur en effectuant un traitement d'image sur l'image mobile de découpe (CM1) capturée par le dispositif de capture d'image (110).

2. Système de découpe (1) selon la revendication 1, dans lequel le dispositif de commande d'affichage (140) affiche sur l'écran d'affichage (121), en même temps que l'image mobile d'erreur (EM1), un message d'erreur (EC2) fondé sur les informations d'erreur (EC1) reçues par le dispositif de commande de réception (134).

3. Système de découpe (1) selon les revendications 1 ou 2, dans lequel la période d'enregistrement des erreurs (TMO) comprend :
une période de temps avant la réception (TM1) avant l'heure de réception (RT1), et
une période de temps après la réception (TM2) après l'heure de réception (RT1).

4. Système de découpe (1) selon la revendication 3, dans lequel :
l'erreur survenant au dispositif de découpe (100) est l'une des suivantes :
une erreur de concomitance (ER1) qui est détectée par le dispositif de commande de détection d'erreurs (64) et qui se produit dans le dispositif de traitement (100) au même moment, et
une erreur subséquente (ER2) qui se produit dans le dispositif de traitement (100) avant d'être détectée par le dispositif de commande de détection d'erreurs (64),
le dispositif de commande de la notification (123) comprend un dispositif de commande de détermination (136) qui détermine si l'erreur survenant au dispositif de découpe (100) est l'erreur de concomitance (ER1) ou l'erreur de sous-séquence (ER2) sur la base des informations d'erreur (EC1) reçues par le dispositif de commande de réception (134),
au cas où l'erreur survenant au dispositif de découpe (100) est déterminée par le dispositif de commande de détermination (136) comme étant l'erreur de concomitance (ER1), le dispositif de commande d'extraction (138) extrait l'image animée de l'erreur (EM1) pour laquelle la période de temps avant réception (TM1) est fixée à une première période de temps avant réception prédéterminée (TM11), et
au cas où l'erreur survenant au dispositif de découpe (100) est déterminée par le dispositif de commande de détermination (136) comme étant l'erreur subséquente (ER2), le dispositif de commande d'extraction (138) extrait l'image animée de l'erreur (EM1) pour laquelle la période de temps avant la réception (TM1) est réglée sur une deuxième période de temps avant la réception (TM12) prédéterminée plus longue que la première période de temps avant la réception (TM11).

5. Système de découpe (1) selon la revendication 4, dans lequel :
le dispositif de découpe (100) comprend :
un mécanisme de découpe (13) qui comprend une partie de saisie d'outil (32) saisissant un outil de traitement en forme de tige (8) et une broche (31) faisant tourner la partie de saisie d'outil (32), et qui est situé dans l'espace de découpe (26), et
un capteur d'outil (36) situé dans l'espace de découpe (26) et pouvant entrer en contact avec l'outil de traitement (8) saisi par la partie de saisie de l'outil (32),
le dispositif de commande (60) comprend une mémoire (61) dans laquelle est stockée une longueur de détermination, qui est une longueur de l'outil de traitement (8) dans une direction axiale de celui-ci dans un état dans lequel l'outil de traitement (8) est saisi par la partie de préhension de l'outil (32),
le dispositif de commande de détection d'erreur (64) calcule une longueur réelle, qui est une longueur réelle de l'outil de traitement (8) dans la direction axiale, sur la base de la position du mécanisme de découpe (13) lorsque l'outil de traitement (8) saisi par la partie de saisie d'outil (32) est mis en contact avec le capteur d'outil (36), et dans le cas où la longueur réelle est plus courte que la longueur de détermination, le dispositif de commande de détection d'erreur (64) détecte qu'une erreur de bris d'outil selon laquelle l'outil de traitement (8) est brisé s'est produite, et
l'erreur de bris d'outil est l'erreur de sous-séquence (ER2).

6. Système de découpe (1) selon l'une des revendications 1 à 4, dans lequel :
le dispositif de découpe (100) comprend :
un mécanisme de découpe (13) situé dans l'espace de découpe (26) et qui découpe la cible de traitement (5),
un mécanisme de support (16) situé dans l'espace de découpe (26) et supportant la cible de traitement (5), et
un mécanisme de mouvement (55) qui déplace le mécanisme de découpe (13) et la cible de traitement (5) soutenue par le mécanisme de support (16) l'un par rapport à l'autre,
le dispositif de commande (60) comprend :
une mémoire (61) dans laquelle est stocké un fichier de découpe (FL1) dans lequel est stocké un programme de découpe (PG1), et
un dispositif de commande de découpe (62) qui commande le mécanisme de découpe (13), le mécanisme de support (16) et le mécanisme de mouvement (55) de manière à ce que la cible de traitement (5) soit découpée sur la base du programme de découpe (PG1), et
le dispositif de commande d'enregistrement (132) enregistre l'image animée de découpe (CM1) pour un programme de découpe (PG1) stocké sur le film de découpe (FL1).

7. Système de découpe (1) selon l'une des revendications 1 à 6, comprenant en outre:
un dispositif de découpe supplémentaire (100) qui comprend un corps principal supplémentaire (11) comprenant un espace de découpe supplémentaire (26) dans lequel une cible de traitement supplémentaire (5) est découpée et qui comprend également un dispositif de commande supplémentaire (60) ; et
un dispositif de capture d'images supplémentaire (110) qui capture une image mobile de découpe supplémentaire (CM1) de l'intérieur de l'espace de découpe supplémentaire (26) ;
dans lequel :
le dispositif de commande des notifications (123) est connecté de manière communicable au dispositif de découpe supplémentaire (100) et au dispositif de capture d'images supplémentaire (110),
le dispositif de commande supplémentaire (60) comprend :
un dispositif de commande de détection d'erreur supplémentaire (64) qui détecte une erreur survenant pendant que la cible de traitement supplémentaire (5) est découpée, et
un dispositif de commande de transmission supplémentaire (66) qui transmet des informations d'erreur supplémentaires (EC1) au dispositif de commande de notification (123) lorsque l'erreur est détectée par le dispositif de commande de détection d'erreur supplémentaire (64),
le dispositif de commande d'enregistrement (132) enregistre l'image animée de découpe supplémentaire (CM1) capturée par le dispositif de capture d'images supplémentaire (110),
le dispositif de commande de réception (134) reçoit les informations d'erreur supplémentaires (EC1) transmises par le dispositif de commande de transmission supplémentaire (66),
le dispositif de commande d'extraction (138) extrait une image animée d'erreur supplémentaire (EM1) de l'image animée de découpe supplémentaire (CM1) capturée par le dispositif de capture d'image supplémentaire (110), l'image animée d'erreur supplémentaire (EM1) étant une image animée d'une période de temps d'enregistrement d'erreur prédéterminée supplémentaire (TM0) sur la base de l'heure de réception supplémentaire (RT1) à laquelle le dispositif de commande de réception (134) reçoit l'information d'erreur supplémentaire (EC1), et
le dispositif de commande d'affichage (140) affiche, sur l'écran d'affichage (121), l'image mobile d'erreur supplémentaire (EM1) extraite par le dispositif de commande d'extraction (138).

8. Système de découpe (1) selon l'une des revendications 1 à 7, dans lequel l'écran d'affichage (121) est un écran de terminal mobile.

9. Procédé de découpe pour un système de découpe (1) comprenant un dispositif de découpe (100) qui comprend un espace de découpe (26) dans lequel une cible de traitement (5) est découpée, un dispositif de capture d'images (110) qui capture une image mobile de découpe (CM1) de l'intérieur de l'espace de découpe (26), et un dispositif de notification d'erreur (120) qui comprend un écran d'affichage (121) et un dispositif de commande de notification (123), le procédé comprenant les étapes suivantes :
détection d'une erreur survenant lors de la découpe de la cible de traitement (5), et
transmission des informations d'erreur (EC1) au dispositif de commande de la notification (123) lorsque l'erreur est détectée,
dans lequel le dispositif de commande de la notification (123) exécute les étapes suivantes :
enregistrement de l'image mobile de découpe (CM1) capturée par le dispositif de capture d'images (110) pendant que le dispositif de découpe (100) effectue la découpe,
réception de l'information d'erreur transmise (EC1),
extraction d'une image mobile d'erreur (EM1) de l'image mobile de découpe (CM1) capturée par le dispositif de capture d'images (110), l'image mobile d'erreur (EM1) étant une image mobile d'une période de temps d'enregistrement d'erreur prédéterminée (TM0) sur la base de l'heure de réception (RT1) à laquelle le dispositif de commande de réception (134) reçoit l'information d'erreur (EC1), et
affichage, sur l'écran d'affichage (121), de l'image mobile d'erreur extraite (EM1), et
l'erreur est détectée en effectuant un traitement d'image sur l'image mobile de découpe (CM1) capturée par le dispositif de capture d'images (110).
